Europäisches Patentamt

European Patent Office

Office européen des brevets

(11) Publication number: **0 382 229 B1**

(12) **EUROPEAN PATENT SPECIFICATION**

(45) Date of publication of patent specification: **10.11.93**

(51) Int. Cl.5: **C08L 23/10**, C08K 13/04,
//(C08K13/04,7:08,3:34,5:09),
(C08L23/10,101:00)

(21) Application number: **90102517.1**

(22) Date of filing: **08.02.90**

(54) **Polypropylene composite material reinforced with fibrous magnesium oxysulfate of granular form.**

(30) Priority: **10.02.89 JP 32146/89**

(43) Date of publication of application:
**16.08.90 Bulletin 90/33**

(45) Publication of the grant of the patent:
**10.11.93 Bulletin 93/45**

(84) Designated Contracting States:
**DE ES FR GB IT**

(56) References cited:

**PATENT ABSTRACTS OF JAPAN, vol. 10, no. 235 (C-366)[2291], 14th August 1986; & JP-A-61 69 848 (IDEMITSU PETROCHEM. CO. LTD) 10-04-1986**

(73) Proprietor: **UBE INDUSTRIES, LTD.**
**12-32, Nishihonmachi 1-chome**
**Ube-shi, Yamaguchi-ken 755(JP)**

(72) Inventor: **Tsutsui, Kiyoshi, c/o Sakai Factory**
**Ube Industries, Ltd,**
**3-1, Chikko-shinmachi**
**Sakai-shi, Osaka-fu(JP)**
Inventor: **Ueno, Kouhei, c/o Sakai Factory**
**Ube Industries, Ltd.**
**3-1, Chikko-shinmachi**
**Sakai-shi, Osaka-fu(JP)**
Inventor: **Akagawa, Tomohiko, c/o Sakai Factory**
**Ube Industries, Ltd.,**
**3-1, Chikko-shinmachi**
**Sakai-shi, Osaka-fu(JP)**
Inventor: **Hinenoya, Saburo, c/o Sakai Factory**
**Ube Industries, Ltd.,**
**3-1, Chikko-shinmachi**
**Sakai-shi, Osaka-fu(JP)**

(74) Representative: **Schwabe - Sandmair - Marx**
**Stuntzstrasse 16**
**D-81677 München (DE)**

**Description**

BACKGROUND OF THE INVENTION AND RELATED ART STATEMENT

The present invention relates to a polypropylene composite material reinforced with fibrous magnesium oxysulfate of granular form.

It is a well known technique to add an inorganic substance to a polypropylene resin in order to improve the latter's properties such as rigidity, mechanical strengths, heat resistance, mold shrinkage factor, dimensional stability and the like. As such an inorganic substance, particulate substances (e.g. calcium carbonate, barium sulfate, magnesium hydroxide), small plate-shaped or flaky substances (e.g. talc, mica) and fibrous substances (e.g. glass fiber, asbestos) are well known.

The particulate substances show no sufficient reinforcing effect for polypropylene resins. Therefore, the polypropylene resin compositions obtained by adding such a particulate substance to a polypropylene resin cannot be used ordinarily in applications where a high performance is required. Meanwhile, the small plate-shaped or flaky substances and the fibrous substances show an excellent two or one-dimensional reinforcing effect for polypropylene resins and accordingly are in wide use as a reinforcing material for polypropylene resins. These materials showing a high reinforcing effect, however, have drawbacks in other respects, thus restricting their use as a reinforcing material depending upon their applications. For example, the polypropylene resins containing a small plate-shaped or flaky substance, as compared with those containing a fibrous substance (e.g. glass fiber), generally has low rigidity when made into a molded article and easily give rise to flow marks during molding. The polypropylene resins containing a fibrous substance, when made into a molded article, show small elongation, easily cause silver streaking, and give poor luster. The polypropylene resin containing a glass fiber, in particular, shows low impact resistance at high temperatures when made into a molded article. Hence, in adding these conventional reinforcing materials to polypropylene resins, the selection of a reinforcing material must be made in consideration of not only the application of the molded article obtained from the resulting polypropylene resin composition but also the drawback of the reinforcing material.

The above mentioned drawbacks of the conventional reinforcing materials can be partly reduced by, for example, the selection and modification of a polypropylene resin used as a base material, the surface treatment of an inorganic substance used as a reinforcing material, the addition of an appropriate third substance and the modification of molding conditions. However, these measures cannot sufficiently reduce the above drawbacks of the conventional reinforcing materials.

Japanese Patent Application Kokai (Laid-Open) No.57-109846 and No. 61-69848 disclose that the use of fibrous magnesium oxysulfate as an inorganic substance can reduce the above drawbacks.

However, since the fibrous magnesium oxysulfate has a very small bulk specific gravity, its mixing with a pellet-like or granular resin is not easy (a polypropylene resin of pellet or granular form is generally used in ordinary compounding). That is, since the fibrous magnesium oxysulfate and the polypropylene resin have different shapes and densities, they are, as in the ordinary mixing of an inorganic substance and a polypropylene resin, premixed in a dry blender such as V-shaped blender, ribbon mixer or the like and then fed to a melt mixer (this is a dry blending method); in this case, there easily occurs, at the inlet of the melt mixer, bridging or the separation of the polypropylene resin and the fibrous magnesium oxysulfate. This reduces the productivity of a desired reinforced resin composition and makes it difficult to obtain a uniform resin composition; as a result, the molded articles produced therefrom have poor properties and poor appearance in some cases.

Japanese Patent Application Kokai (Laid-Open) No. 59-172533 discloses a process for producing a reinforced resin composition free from the above mentioned drawbacks, by mixing a thermoplastic resin and fibrous magnesium oxysulfate.

This process comprises feeding into a melt kneader a pellet-like or granular thermoplastic resin and fibrous magnesium oxysulfate Separately through respective inlets and then melt-kneading them in the kneader.

Also in this process, however, since the fibrous magnesium oxysulfate has a very small bulk specific gravity, the uniform feeding of the magnesium oxysulfate into the kneader is difficult; as a result, it is difficult to obtain a resin composition of good properties and good appearance.

SUMMARY OF THE INVENTION

The present inventors made study in order to obtain a polypropylene composite material reinforced with fibrous magnesium oxysulfate, having good properties, good appearance and good dimensional stability. As

EP 0 382 229 B1

a result, it was found that fibrous magnesium oxysulfate of granular form wherein each fiber has a diameter of ∅.1-1.8 µm and an aspect ratio of 7∅-15∅ can be obtained by synthesizing fibrous magnesium oxysulfate by, for example, a hydrothermal reaction, freeing the synthesis product of the portion of 25∅ µm or more and subjecting the resulting product to pelletization under particular conditions and further that the mixing of the fibrous magnesium oxysulfate of granular form and a polypropylene resin at particular proportions causes no bridging at the inlet of a kneader and consequently can produce a uniform polypropylene composite material having good properties and good appearance. The above finding has led to the completion of the present invention.

According to the present invention, there is provided a polypropylene composite material comprising

(A) 35-91% by weight of a polypropylene resin having a melt flow index of 3-10∅ g/1∅ min,

(B) 3-35% by weight of fibrous magnesium oxysulfate of granular form wherein each fiber has a diameter of ∅.1-1.8 µm and an aspect ratio of 7∅-150, said magnesium oxysulfate being obtained by synthesizing fibrous oxysulfate, freeing the synthesis product of the portion of 25∅ µm or more and subjecting the resulting product to dehydration, pelletization and drying,

(C) 3-2∅% by weight of talc having an average particle diameter of ∅.5-2.5 µm, and

(D) 3-2∅% by weight of a thermoplastic elastomer, and further comprising ∅.1-1.∅ part by weight, per 1∅∅ parts by weight of the total of (A), (B), (C) and (D), of a metal soap.


DETAILED DESCRIPTION OF THE INVENTION


Component (B)


Firstly, there is described a process for producing the fibrous magnesium oxysulfate of granular form used in the present invention [this magnesium oxysulfate is hereinafter referred to as the component (B)].

The fibrous magnesium oxysulfate used in the present invention gives a powder method X-ray diffraction spectrum which well agrees with that shown in ASTM No.7-415, and accordingly can be represented by $MgSO_4.5MgO.8H_2O$ which is a rational formula shown in ASTM No.7-415.

First, magnesium hydroxide or magnesium oxide is dispersed in an aqueous magnesium sulfate solution.

Use of too large an amount of magnesium hydroxide or magnesium oxide fails to produce a desired fibrous product. Therefore, it is preferable that magnesium hydroxide or magnesium oxide be dispersed in a concentration of 25% by weight or less, preferably ∅.1-2∅% by weight.

As is clear from the above rational formula, ∅.2 mol of magnesium sulfate is theoretically required per 1 mol of magnesium hydroxide or magnesium oxide. However, industrially it is preferable to use magnesium sulfate in a larger-than-stoichiometric amount because the use of magnesium hydroxide or magnesium oxide in a large-than-stoichiometric amount gives a reaction mixture in which an objective product and unreacted magnesium hydroxide or magnesium oxide coexist in a solid form, making difficult the separation of the objective product from the reaction mixture. Therefore, the use of more than ∅.2 mol of magnesium sulfate per 1 mol of magnesium hydroxide or magnesium oxide makes it possible to separate the objective product from the reaction mixture by a simple procedure such as filtration, decantation or the like.

It is sufficient that the reaction system contain magnesium sulfate and magnesium hydroxide or magnesium oxide. Accordingly, sulfuric acid may be used in place of magnesium sulfate.

The slurry dispersion of magnesium hydroxide or magnesium oxide in an aqueous magnesium sulfate solution is then subjected to a hydrothermal reaction. The hydrothermal reaction is caused in water under a temperature higher than 1∅∅°C and a high pressure.

The hydrothermal reaction temperature is 1∅∅-350°C, preferably 12∅-250°C because the temperatures lower than 1∅∅°C give no fibrous product and the temperatures higher than 350°C allow the product to cause dehydration. Since the hydrothermal reaction is a solid-liquid reaction, it is preferably effected with stirring so as to ensure sufficient solid-liquid contact. The reaction time varies depending upon the reaction conditions but is appropriately ∅.1-3∅ hours in usual cases.

The thus synthesized fibrous magnesium oxysulfate has a cotton form. Hitherto, this has been used in a blend with a resin, after drying. In the present invention, however, the above fibrous magnesium oxysulfate of cotton form is further subjected to the following post-treatment to obtain fibrous magnesium oxysulfate of granular form.

That is, the fibrous magnesium oxysulfate of cotton form synthesized above is freed of the fluffy ball-like portion of 25∅ µm or more by a vibratory screen and the resulting product is then dehydrated to a water content of 65-80% by weight, preferably 70-75% by weight based on the total weight including water. This dehydration operation is very important in the present invention. When the dehydration is not made to

3

the above water content range, the subsequent pelletization operation does not proceed as desired and no granule can be produced. That is, when the dehydration is made to a water content of less than 65%, the fiber-to-fiber adhesion by water is insufficient and no granule can be produced. When the dehydration is made to a water content of more than 80%, once formed granules adhere to each other owing to the high water content. The dehydration is effected using a centrifugal dehydrator ordinarily. The measurement of the water content was made according to the following procedure.

The dehydrated cake of 10 g is put into a measuring bottle and the bottle is weighed. The bottle is heated at 160°C, 30 minutes to vaporize the water of the cake and and cooled down to roomtemperature in a desiccator. And then the bottle is weighed and the water content is calculated according to the following formula.

$$\text{Water Content(\%)} = 100 - \frac{\text{Weight of the bottle after dried}}{\text{Weight of the bottle before dried}} \times 100$$

The above obtained dehydrated cake is pelletized with a pelletizer to a granular form of 1-5 mm in diameter and 1-20 mm in length, preferably 2-4 mm in diameter and 2-7 mm in length. The obtained pellet of granular form is then dried to a water content of 1% or less to obtain fibrous magnesium oxysulfate of granular form.

In the present invention, "granular form" refers to a columnar or cuboidal form obtained by pelletization of fibrous magnesium oxysulfate and having an average apparent diameter of about 1-4 mm and a length of 1-5 mm, for example.

It is necessary that the fibrous magnesium oxysulfate of granular form [the component (B)] used in the present invention be an aggregate of magnesium oxysulfate fibers each having a diameter of 0.1-1.8 $\mu$m, preferably 0.1-1.0 $\mu$m and an aspect ratio of 70-150, preferably 90-130. When the fiber diameter is less than 0.1 $\mu$m, the resulting molded material has insufficient rigidity. When the fiber diameter is more than 1.8 $\mu$m, the molded material causes deformation. When the aspect ratio is less than 70, the resulting molded material has insufficient rigidity. When the aspect ratio is more than 150, the molded material causes deformation.

The component (B) is used in the composite material excluding the metal soap, in an amount of 3-35% by weight, preferably 5-30% by weight. When the amount is less than 3% by weight, the resulting composite material has insufficient rigidity. When the amount is more than 35% by weight, the composite material has insufficient impact resistance.

Component (A)

The component (A) used in the present invention is a polypropylene resin having a melt flow index of 3-100 g/10 min, preferably 3-50 g/10 min. The polypropylene resin can be any polypropylene resin usable as a molding material for general applications, such as crystalline homopolymer, propylene-ethylene block copolymer, propylene-ethylene random copolymer or the like. A propylene-ethylene block copolymer is preferred.

When the melt flow index of the component (A) is less than 3 g/10 min, fluidity during molding is low, making poor the appearance of the molded material. When the melt flow index is more than 100 g/10 min, the molded material has low impact resistance.

The component (A) is used in the composite material excluding the metal soap, in an amount of 35-91% by weight, preferably 46-87% by weight. When the amount is less than 35% by weight, the resulting molded material has poor appearance. When the amount is more than 91% by weight, the molded material has low flexural modulus.

It is possible to use two or more polypropylene resins as long as the object of the present invention is achieved. It is also possible to use a polypropylene resin modified with at least one of unsaturated organic acids (e.g. acrylic acid, maleic acid, fumaric acid, itaconic acid) and their derivatives (e.g. anhydrides, esters, amides), preferably modified with maleic anhydride or itaconic anhydride.

### Component (C)

It is necessary that the talc (C) used in the present invention have an average particle diameter of $0.5$-$2.5$ $\mu$m, preferably $1.5$-$2.2$ $\mu$m. When the average particle diameter is less than $0.5$ $\mu$m, dispersibility of talc in composite material is poor. When the average particle diameter is more than $2.5$ $\mu$m, the resulting molded material has low impact resistance. The talc is used in the composite material excluding the metal soap, in an amount of 3-20% by weight, preferably 4-17% by weight. When the amount is less than 3% by weight, the resulting molded material has insufficient rigidity. When the amount is more than 20% by weight, the molded material has poor appearance.

The talc (C) may be surface-treated as long as the object of the present invention is achieved.

### Component (D)

The thermoplastic elastomer used in the present polypropylene composite material is preferably, for example, olefin type elastomers such as ethylene-propylene rubber (EPR), ethylene-butylene rubber (EBR), ethylene-propylene-butylene rubber (EPBR), ethylene-propylene-diene rubber (EPDM) and the like, and styrene type elastomers such as styrene-butadiene-styrene rubber (SBR), styrene-isoprene-styrene rubber (SIS), hydrogenated SBS (SEBS), hydrogenated SIS (SEPS), styrene-butadiene rubber and the like. Of these. EPR, EBR, EPBR, SEBS and SEPS are particularly preferred.

The thermoplastic elastomer is used in the composite material excluding the metal soap, in an amount of 3-20% by weight, preferably 4-17% by weight. When the amount is less than 3% by weight, the resulting molded material has low impact resistance. When the amount is more than 20% by weight, the molded material has low rigidity. The thermoplastic elastomer may be a mixture of two or more thermoplastic elastomers as long as the object of the present invention is achieved.

### Compounding, etc.

In the present invention, it is necessary that when the components (A). (B), (C) and (D) are melt kneaded, a metal soap be added thereto in an amount of $0.1$-$1.0$ part by weight, preferably $0.2$-$0.5$ part by weight per $100$ parts by weight of the total of (A), (B), (C) and (D). When the amount of the metal soap is outside the above range, the resulting molded material has low rigidity.

The metal soap is a metal salt of a higher fatty acid, represented by $M(OOCR)_n$ wherein M is a metal such as Ca, Ba, Mg, Zn or the like, n corresponds to the valency of M and is 1 or 2, and RCOO is a residue of a higher fatty acid such as stearic acid, lauric acid, octylic acid or the like. The metal soap specifically includes magnesium stearate, calcium stearate, lithium stearate and zinc laurate.

The polypropylene composite material of the present invention is preferably obtained by kneading individual components by an extruder such as high-speed double-screw extruder, multivent double-screw extruder, single-screw extruder or the like.

The polypropylene composite material of the present invention may further contain an antioxidant, an ultraviolet absorber, an antistatic agent, a pigment, etc. to allow the molded material produced therefore to possess improved properties. These additives are added during or after mixing of (A), (B), (C), (D) and the metal soap.

As described above, the polypropylene composite material of the present invention can be obtained by melt kneading a polypropylene resin, a particular fibrous magnesium oxysulfate of granular form, a particular talc and a thermoplastic elastomer and further by adding, during the melt kneading, a particular metal soap. The molded material produced from said polypropylene composite material has good balance in rigidity and impact resistance and good appearance and causes little deformation; accordingly, it can be suitably used as large-sized parts of automobiles and household electric appliances.

### EXAMPLES

The present invention is hereinafter described in more detail by way of Examples and Comparative Examples. However, the present invention is in no way restricted to these Examples.

In the following Examples, evaluation of composite materials was conducted according to the following test methods.

(1) Flexural modulus

Measured according to ASTM D 2853.

(2) Izod impact strength

Measured according to ASTM D 256.

(3) Surface appearance

A resin composition was injection-molded to a sheet of 360 mm x 140 mm x 2 mm (thickness) having a mirror surface, and its surface appearance was visually rated according to the following criterion.

○ :   Good appearance - the surface has luster and is free from flow marks.

X :   Poor appearance - the surface has no luster and has flow marks.

(4) Deformation

A resin composition was injection-molded into a disc of 100 mm (dia.) x 1.6 mm (thickness) having a mirror surface. After 48 hours, the disc was placed on a level plate. The height from the level plate, of the highest point of the disc when any point of the disc was pressed down, was measured.

The components used in the composite materials of the Examples and Comparative Examples were as follows.

Component (A)

(A-1) Crystalline ethylene-propylene block copolymer having an ethylene content of 7.3 wt. %, a melt flow index of 9 g/10 min. and 12 wt. % p-xylene soluble at normal temperature has an intrinsic viscosity of 4.4.

(A-2) Crystalline ethylene-propylene block copolymer having an ethylene content of 7.5 wt. % and a melt flow index of 20 g/10 min. and 13.5 wt. % p-xylene soluble at normal temperature has an instrinsic viscosity of 4.6.

(A-3) Crystalline propylene-homopolymer having a melt flow index of 15 g/10 min.

(A-4) Crystalline itaconic anhydride-modified ethylene-propylene block copolymer produced by graft-reaction of 0.3 parts by weight of itaconic anhydride and 100 parts by weight of the crystalline ethylene-propylene block copolymer having an ethylene content of 7.5 wt. % and a melt flow index of 3 g/10 min.

Component (B)

(B-1) Fibrous magnesium oxysulfate of granular form having an average apparent diameter of 1-4 mm and a length of 1-5 mm, wherein each fiber has an average diameter of 0.3 $\mu$m and an aspect ratio of 100.

(B-2) Fibrous magnesium oxysulfate of cotton form, wherein each fiber has an average diameter of 0.3 $\mu$m and an aspect ratio of 100.

Component (C)

(C-1) Talc having an average particle diameter of 1.9 $\mu$m.

(C-2) Talc having an average particle diameter of 2.9 $\mu$m.

Component (D)

(D-1) Ethylene-propylene rubber (EPR) (trade name: JSR EP 941P) having a Mooney viscosity $ML_{1+4}$ - (100°C) of 40

(D-2) Styrene type thermoplastic elastomer (trade name: Kraton G 1657)

(D-3) Hydrogenated styrene-isoprene-styrene rubber (SEPS) (trade name: KL-2043 supplied by Kuraray Co.) having a melt flow rate of 13 g/10 min. (200°C, 10 kg load)

(D-4) Ethylene-propylene-diene rubber (EPDM) (trade name: JSR EP 43) having a Mooney viscosity $ML_{1+4}$(100°C) of 45

6

Metal soap

Magnesium stearate

Lithium stearate

There was also used a glass fiber having an average diameter of 10 $\mu$m and an average length of 6 mm.

Examples 1-11 and Comparative Examples 1-9

Components shown in Table 1, Table 2 or Table 3 and 0.2 parts by weight of a phenol type antioxidant were thoroughly mixed by a blender. Each blend was then subjected to kneading and pelletization by a high-speed double-screw extruder at 220°C. The resulting pellets were made into test pieces by an injection molding machine. The test pieces were measured for properties.

The results are shown in Table 1, Table 2 and Table 3.

As is clear from Table 1, Table 2 and Table 3, all of the present composite materials of Exmaples 1-6 have good balance in rigidity and impact resistance and good appearance and cause no deformation in molded material; thus, they have good quality. In contrast, the compositions of Comparative Examples 1-9 have problems in at least either of mechanical properties, deformation and appearance.

## Table 1

|  | Example1 | Example2 | Example 3 | Example 5 | Comparative Example 1 | Comparative Example 2 | Comparative Example 3 | Comparative Example 4 |
|---|---|---|---|---|---|---|---|---|
| A – 1 (wt%) | 6 5 | 5 4 | 7 5 | – | 6 5 | 6 5 | 6 5 | 6 5 |
| A – 2 (wt%) | – | – | – | 7 0 | – | – | – | – |
| B – 1 (wt%) | 1 5 | 2 5 | 1 5 | 1 0 | – | – | 1 5 | 1 5 |
| B – 2 (wt%) | – | – | – | – | 1 5 | – | – | – |
| G F (wt%) | – | – | – | – | – | 1 5 | – | – |
| C – 1 (wt%) | 1 0 | 6 | 5 | 1 0 | 1 0 | 1 0 | – | 1 0 |
| C – 2 (WT%) | – | – | – | – | – | – | 1 0 | – |
| D – 1 (WT%) | 1 0 | 1 5 | 5 | – | 1 0 | 1 0 | 1 0 | 1 0 |
| D – 2 (WT%) | – | – | – | 1 0 | – | – | – | – |
| Magnesium stearate (PHR) | 0.4 | 0.6 | 0.4 | 0.4 | 0.4 | 0.4 | 0.4 | 0 |
| Flexural modulus (kg/cm$^2$) | 35,200 | 37,000 | 31,900 | 33,800 | 27,200 | 38,600 | 34,500 | 28,500 |
| Izod impact strength (23°C) (kg·cm/cm) | 1 6 | 1 5 | 1 3 | 3 7 | 8 | 9 | 1 0 | 1 0 |
| Surface appearance | ○ | ○ | ○ | ○ | X | X | ○ | X |
| Deformation of molded material(mm) | 0 | 0 | 0 | 0 | 3 | 5 | 1 | 2 |

P H R : Part by weight per 100 parts by weight of total of (A) + (B) + (C) + (D)

EP 0 382 229 B1

Table 2

| | Example4 | Example6 | Comparative Example 5 | Comparative Example 6 | Comparative Example 7 | Comparative Example 8 | Comparative Example 9 |
|---|---|---|---|---|---|---|---|
| A−1 (wt%) | − | 3 5 | 5 5 | 5 7 | 5 0 | 7 7 | 7 5 |
| A−2 (wt%) | 7 2 | 3 7 | − | − | − | − | − |
| B−1 (wt%) | 1 3 | 1 2 | 4 1 | 5 | 1 5 | 0 | 1 5 |
| C−1 (wt%) | 7 | 8 | 0 | 3 0 | 1 0 | 1 8 | 1 0 |
| D−1 (wt%) | 8 | − | 4 | 8 | 2 5 | 5 | 0 |
| D−2 (wt%) | − | 8 | − | − | − | − | − |
| Magnesium stearate (PHR) | 0.4 | 0.4 | 0.6 | 0.4 | 0.4 | 0 | 0.4 |
| Flexural modulus (kg/cm²) | 30,100 | 35,100 | 43,900 | 32,600 | 19,000 | 21,000 | 39,600 |
| Izod impact strength (23°C) (kg·cm/cm) | 2 5 | 3 1 | 4 | 8 | 2 8 | 1 5 | 2 |
| Surface appearance | ○ | ○ | ○ | X | X | ○ | ○ |
| Deformation of molded material(mm) | 0 | 0 | 4 | 0 | 0 | 0 | 2 |

PHR : Part by weight per 100 parts by weight of total of (A) + (B) + (C) + (D)

Table 3

| | Example 7 | Example 8 | Example 9 | Example 10 | Example 11 |
|---|---|---|---|---|---|
| A-1 (wt%) | - | - | 57 | 75 | - |
| A-2 (wt%) | - | 66 | - | - | 72 |
| A-3 (wt%) | 68 | - | - | - | - |
| A-4 (wt%) | - | 4 | - | - | - |
| B-1 (wt%) | 15 | 10 | 25 | 15 | 13 |
| C-1 (wt%) | 5 | 10 | 6 | 5 | 7 |
| D-1 (WT%) | - | - | - | - | 8 |
| D-2 (WT%) | 12 | 10 | - | - | - |
| D-3 (WT%) | - | - | 12 | - | - |
| D-4 (WT%) | - | - | - | 5 | - |
| Magnesium stearate (PHR) | 0.4 | 0.4 | 0.4 | 0.4 | - |
| Lithium stearate (PHR) | - | - | - | - | 0.4 |
| Flexural modulus (kg/cm$^2$) | 32,500 | 33,500 | 38,000 | 31,000 | 30,600 |
| Izod impact strength (23°C) (kg•cm/cm) | 13 | 40 | 14 | 15 | 25 |
| Surface appearance | ○ | ○ | ○ | ○ | ○ |
| Deformation of molded mererial(mm) | 0 | 0 | 0 | 0 | 0 |
| PHR: Part by weight per 100 parts by weight of total of(A) + (B) + (C) + (D). | | | | | |

## Claims
## Claims for the following Contracting States : DE, FR, GB, IT

1. A polypropylene composite material obtainable by melt-kneading a composition comprising:
   (A) 35-91% by weight of a polypropylene resin having a melt flow index of 3-100 g/10 min.;
   (B) 3-35% by weight of fibrous magnesium oxysulfate of granular form wherein each fiber has a diameter of 0.1-1.8 $\mu$m and an aspect ratio of 70-150, said magnesium oxysulfate being obtainable by synthesizing fibrous magnesium oxysulfate, freeing the synthesis product of the portion of 250 $\mu$m or more and subjecting the resulting product to dehydration to a water content of 65-80% by weight based on the total weight including water, pelletization and drying;
   (C) 3-20% by weight of talc having an average particle diameter of 0.5-2.5 $\mu$m; and
   (D) 3-20% by weight of a thermoplastic elastomer, and further comprising 0.1-1.0 part by weight, per 100 parts by weight of the total of (A), (B), (C) and (D), of a metal soap.

2. A polypropylene composite material according to Claim 1, wherein the polypropylene (A) is a polypropylene resin modified with at least one of unsaturated organic acids and their derivatives.

3. A polypropylene composite material according to Claim 1, wherein the thermoplastic elastomer (D) is an olefin type elastomer or a styrene type elastomer.

4. A polypropylene composite material according to Claim 3, wherein the olefin type elastomer is an ethylene-propylene rubber.

5. A polypropylene composite material according to any of Claims 1, 2 and 3, wherein the metal soap is selected from magnesium stearate, calcium stearate, lithium stearate and zinc laurate.

10

EP 0 382 229 B1

**Claims for the following Contracting State : ES**

1. A process for preparing a polypropylene composite material by melt-kneading a composition comprising:
   (A) 35-91% by weight of a polypropylene resin having a melt flow index of 3-100 g/10 min.;
   (B) 3-35% by weight of fibrous magnesium oxysulfate of granular form wherein each fiber has a diameter of 0.1-1.8 μm and an aspect ratio of 70-150, said magnesium oxysulfate being obtainable by synthesizing fibrous magnesium oxysulfate, freeing the synthesis product of the portion of 250 μm or more and subjecting the resulting product to dehydration to a water content of 65-80% by weight based on the total weight including water, pelletization and drying;
   (C) 3-20% by weight of talc having an average particle diameter of 0.5-2.5 μm; and
   (D) 3-20% by weight of a thermoplastic elastomer, and further comprising 0.1-1.0 part by weight, per 100 parts by weight of the total of (A), (B), (C) and (D), of a metal soap.

2. A process according to Claim 1, wherein the polypropylene (A) is a polypropylene resin modified with at least one of unsaturated organic acids and their derivatives.

3. A process according to Claim 1, wherein the thermoplastic elastomer (D) is an olefin type elastomer or a styrene type elastomer.

4. A process according to Claim 3, wherein the olefin type elastomer is an ethylene-propylene rubber.

5. A process according to any of Claims 1, 2 and 3, wherein the metal soap is selected from magnesium stearate, calcium stearate, lithium stearate and zinc laurate.

**Patentansprüche**
**Patentansprüche für folgende Vertragsstaaten : DE, FR, GB, IT**

1. Polypropylen-Verbundmaterial erhältlich durch Schmelzkneten einer Zusammensetzung, die
   A) 35 - 91 Gew.% Polypropylenharz mit einem Schmelzflußindex von 30 - 100 9/10 min;
   B) 3 - 35 Gew.% faserförmiges granuliertes Magnesiumoxysulfat, in dem jede Faser einen Durchmesser von 0,1 - 1,8 μm und ein Längenverhältnis von 70 - 150 aufweist, wobei das Magnesiumoxysulfat durch Synthese von faserförmigem Magnesiumoxysulfat erhalten wird, wobei das Syntheseprodukt von dem Anteil mit 250 μm oder mehr befreit und das dabei entstandene Produkt auf einen Wassergehalt von 65 - 80 Gew.% bezogen auf das Gesamtgewicht einschließlich Wasser dehydratisiert, granuliert und getrocknet wird;
   C) 3 - 20 Gew. Talkum mit einem mittleren Teilchendurchmesser von 0,5 - 2,5 μm und
   D) 3 - 20 Gew. % thermoplastisches Elastomer sowie außerdem 0,1 - 1,0 Gewichtsteil auf 100 Gewichtsteile der Gesamtheit von A), B), C) und D) Metallseife
   umfaßt.

2. Polypropylen-Verbundmaterial nach Anspruch 1, bei dem das Polypropylen A) ein mit mindestens einer ungesättigten organischen Säure und deren Derivaten modifiziertes Polypropylenharz ist.

3. Polypropylen-Verbundmaterial nach Anspruch 1, bei dem das thermoplastische Elastomer D) ein Elastomer vom Olefin- oder Styroltyp ist.

4. Polypropylen-Verbundmaterial nach Anspruch 3, bei dem das Elastomer vom Olefintyp ein Ethylenpropylenkautschuk ist.

5. Polypropylen-Verbundmaterial nach einem der Ansprüche 1 bis 3, bei dem die Metallseife aus Magnesiumstearat, Calciumstearat, Lithiumstearat und Zinklaurat ausgewählt wird.

**Patentansprüche für folgenden Vertragsstaat : ES**

1. Verfahren zur Herstellung eines Polypropylen-Verbundmaterials durch Schmelzkneten einer Zusammensetzung, die
   A) 35 - 91 Gew.% Polypropylenharz mit einem Schmelzflußindex von 30 - 100 g/10 min;

11

B) 3 - 35 Gew.% faserförmiges granuliertes Magnesiumoxysulfat, in dem jede Faser einen Durchmesser von 0,1 - 1,8 $\mu$m und ein Längenverhältnis von 70 - 150 aufweist, wobei das Magnesiumoxysulfat durch Synthese von faserförmigem Magnesiumoxysulfat erhalten wird, wobei das Syntheseprodukt von dem Anteil mit 250 $\mu$m oder mehr befreit und das dabei entstandene Produkt auf einen Wassergehalt von 65 - 80 Gew.% bezogen auf das Gesamtgewicht einschließlich Wasser dehydratisiert, granuliert und getrocknet wird;

c) 3 - 20 Gew. Talkum mit einem mittleren Teilchendurchmesser von 0,5 - 2,5 $\mu$m und

D) 3 - 20 Gew. % thermoplastisches Elastomer sowie 0,1 - 1,0 Gewichtsteil auf 100 Gewichtsteile der Gesamtheit von A), B), C) und D) Metallseife

umfaßt.

2. Verfahren nach Anspruch 1, bei dem das Polypropylen A) ein mit mindestens einer ungesättigten organischen Säure und deren Derivaten modifiziertes Polypropylenharz ist.

3. Verfahren nach Anspruch 1, bei dem das thermoplastische Elastomer D) ein Elastomer vom Olefin- oder Styroltyp ist.

4. Verfahren nach Anspruch 3, bei dem das Elastomer vom Olefintyp ein Ethylenpropylenkautschuk ist.

5. Verfahren nach einem der Ansprüche 1 bis 3, bei dem die Metallseife aus Magnesiumstearat, Calciumstearat, Lithiumstearat und Zinklaurat ausgewählt wird.

**Revendications**
**Revendications pour les Etats contractants suivants : DE, FR, GB, IT**

1. Matériau composite de polypropylène pouvant être obtenu par fusion-malaxage d'une composition comprenant :

(A) 35-91 % en poids d'une résine de polypropylène ayant un indice de fusion de 3-100 g/10 minutes ;

(B) 3-35 % en poids d'oxysulfate de magnésium fibreux de forme granulaire, dans lequel chaque fibre a un diamètre de 0,1-1,8 $\mu$m et un rapport d'allongement de 70-150, cet oxysulfate de magnésium pouvant être obtenu en synthétisant l'oxysulfate de magnésium fibreux, en libérant le produit de synthèse de la portion de 250 $\mu$m ou davantage et en soumettant le produit obtenu à la déshydratation jusqu'à une teneur en eau de 65-80 % en poids rapportés au poids total comprenant de l'eau, en transformant en granulés et en séchant ;

(C) 3-20 % en poids de talc d'un diamètre particulaire moyen de 0,5-2,5 $\mu$m ; et

(D) 3-20 % en poids d'un élastomère thermoplastique et comprenant de plus 0,1-1,0 partie en poids, pour 100 parties en poids du total de (A), (a), (C) et (D) d'un savon métallique.

2. Matériau composite de polypropylène selon la revendication 1, dans lequel le polypropylène (A) est une résine de polypropylène modifiée avec au moins l'un des acides organiques insaturés et ses dérivés.

3. Matériau composite de polypropylène selon la revendication 1, dans lequel l'élastomère thermoplastique (D) est un élastomère de type oléfine ou un élastomère de type styrène.

4. Matériau composite de polypropylène selon la revendication 3, dans lequel l'élastomère de type oléfine est un caoutchouc d'éthylène-propylène.

5. Matériau composite de polypropylène selon l'une quelconque des revendications 1, 2 et 3, dans lequel le savon métallique est choisi parmi le stéarate de magnésium, le stéarate de calcium, le stéarate de lithium et le laurate de zinc.

**Revendications pour l'Etat contractant suivant : ES**

1. Procédé pour la préparation d'un matériau composite de polypropylène par fusion-malaxage d'une composition comprenant :

(A) 35-91 % en poids d'une résine de polypropylène ayant un indice de fusion de 3-100 g/10 minutes ;

(B) 3-35 % en poids d'oxysulfate de magnésium fibreux de forme granulaire, dans lequel chaque fibre a un diamètre de 0,1-1,8 $\mu$m et un rapport d'allongement de 70-150, cet oxysulfate de magnésium pouvant être obtenu en synthétisant de l'oxysulfate de magnésium fibreux, en libérant le produit de synthèse de la portion de 250 $\mu$m ou davantage et en soumettant le produit obtenu à la déshydratation jusqu'à une teneur en eau de 65-80 % en poids rapportés au poids total y compris de l'eau, en transformant en granulés et en séchant ;

(C) 3-20 % en poids de talc d'un diamètre particulaire moyen de 0,5-2,5 $\mu$m ; et

(D) 3-20 % en poids d'un élastomère thermoplastique et comprenant de plus 0,1-1,0 partie en poids, pour 100 parties en poids du total de (A), (a), (C) et (D) d'un savon métallique.

**2.** Procédé selon la revendication 1, dans lequel le polypropylène (A) est une résine de polypropylène modifiée avec au moins l'un des acides organiques insaturés et ses dérivés.

**3.** Procédé selon la revendication 1, dans lequel l'élastomère thermoplastique (D) est un élastomère de type oléfine ou un élastomère de type styrène.

**4.** Procédé selon la revendication 3, dans lequel l'élastomère de type oléfine est un caoutchouc d'éthylène-propylène.

**5.** Procède selon l'une quelconque des revendications 1, 2 et 3, dans lequel le savon métallique est choisi parmi le stéarate de magnésium, le stéarate de calcium, le stéarate de lithium et le laurate de zinc.